# FASCICULE DE BREVET EUROPEEN

(11) **EP 2 425 271 B1**
(45) Date de publication et mention de la délivrance du brevet: **03.08.2016**
(21) Numéro de dépôt: 10715851.1
(22) Date de dépôt: 28.04.2010
(51) Int. Cl.: G01S 5/02

(54) **MÉTHODE DE POSITIONNEMENT PAR SIGNAUX WI-FI**
VERFHAREN ZUR POSITIONIERUNG MIT HILFE DER WI-FI-SIGNALE
METHOD FOR POSITIONING BY MEANS OF WI-FI SIGNALS

(30) Priorité: 30.04.2009 FR 0952909
(43) Date de publication de la demande: 07.03.2012
(73) Titulaire: Pole Star SA, 31100 Toulouse (FR)
(72) Inventeur: PROST, Jean-Baptiste, F-31500 Toulouse (FR); GODEFROY, Baptiste, F-31410 Saint Sulpice sur Leze (FR); TERRENOIR, Stéphane, F-31500 Toulouse (FR)
(74) Mandataire: Ilgart, Jean-Christophe
(86) Numéro de dépôt international: PCT/EP2010/055734
(87) Numéro de publication internationale: WO 2010/125113

(56) Documents cités:
- EP-A- 1 841 256
- WO-A-00/75683
- WO-A-2008/143497
- US-A1- 2007 142 063
- US-A1- 2008 129 598

## Description

### DOMAINE TECHNIQUE

La présente invention concerne de manière générale le domaine des systèmes de positionnement utilisant des signaux Wi-Fi en combinaison ou non avec des signaux GNSS (*Global Navigation Satellite System).*

### ÉTAT DE LA TECHNIQUE ANTÉRIEURE

La très grande majorité des terminaux de navigation actuels utilisent un système de positionnement satellitaire ou SPS (*Satellite Positioning System)* tel que le GPS *(G*l*obal Positioning System).* On utilisera par la suite le terme de positionnement lorsqu'un terminal détermine sa position géographique grâce à des signaux qu'il reçoit et, à l'inverse, le terme de localisation lorsque les coordonnées d'un terminal sont déterminées par les signaux qu'il émet.

En milieu urbain, la présence du bâti perturbe la propagation des signaux satellitaires par des effets d'occultation, de réflexion, d'atténuation et de diffraction. Ainsi, les performances de positionnement du SPS sont dégradées tant en termes de disponibilité que de précision.

Afin de remédier à ces inconvénients, il a été proposé d'utiliser les signaux radiofréquences émis par les systèmes de télécommunication sans fil, largement déployés en milieu urbain, pour déterminer la position d'un terminal mobile. Par exemple, l'article de G. Boriello et al. intitulé « Delivering real-world ubiquitous location systems », disponible sous l'URL www.placelab.org/publications/ décrit un système de positionnement (projet Place Lab) utilisant les signaux émis par les bornes d'accès d'un réseau Wi-Fi (IEEE 802.11). Dans ce système, le terminal effectue d'abord un scan des bornes d'accès Wi-Fi se trouvant à sa portée et obtient ainsi leurs adresses MAC ainsi que les puissances respectives ou RSS (*Received Signal Strength*) des signaux reçus. Le terminal recherche ensuite à partir de ces adresses MAC, les positions géographiques des bornes d'accès et en effectue une pondération barycentrique avec les puissances en question pour estimer sa propre position.

D'autres exemples sont donnés dans les documents WO 00/75683 et WO 2008/143497. WO 00/75683 décrit une méthode de positionnement d'un terminal par des mesures TOA cellulaires. Une base de données définissant les traces de rayons indirects est utilisée pour le calcul de position définitive du terminal. WO 2008/143497 concerne l'amélioration de positionnement par GPS en utilisant une base de données topographique.

Ce système de positionnement ne donne toutefois pas entièrement satisfaction dans la mesure où la précision du positionnement reste encore insuffisante. En outre, les positions calculées sont quelquefois aberrantes au sens où elles peuvent correspondre à des zones inaccessibles, ce qui nuit à la fiabilité du système. Enfin, il nécessite la constitution d'une base de données contenant la liste des bornes d'accès et leurs positions géographiques respectives. Les données peuvent être collectées de manière collaborative ou centralisée. Dans une collecte de type collaboratif, des particuliers possédant des terminaux portables Wi-Fi/GPS fournissent au cours de leurs déplacements, leurs positions ainsi que leurs résultats de scan Wi-Fi en ces points (adresses MAC et niveaux RSS). Dans une collecte de type centralisé, des véhicules équipés de récepteurs GPS et de terminaux Wi-Fi, sillonnent la zone à cartographier selon un schéma prédéterminé pour collecter les adresses MAC et les niveaux de RSS. Cette stratégie de collecte permet de disposer d'une couverture complète de la zone et d'éliminer certains artefacts de positionnement engendrés par une distribution inhomogène des points d'accès répertoriés dans la base. La collecte des données qu'elle soit collaborative ou centralisée est cependant un processus lent et coûteux. De surcroît, elle doit être effectuée en continu ou à intervalles réguliers de manière à mettre à jour les bornes d'accès.

Le but de la présente invention est de proposer un système de positionnement utilisant les bornes d'accès d'un système de télécommunication sans fil qui ne présente pas les inconvénients précités, en particulier qui améliore la précision et la fiabilité du positionnement. Un but subsidiaire de la présente invention est de proposer une méthode de constitution de la base de données qui soit rapide, efficace et peu coûteuse.

### EXPOSÉ DE L'INVENTION

La présente invention est définie par une méthode de positionnement d'un terminal à l'aide de signaux reçus d'une pluralité de bornes d'accès d'au moins un réseau de télécommunication sans fil, comprenant :
- une étape d'extraction d'identifiants desdites bornes d'accès à partir des signaux ainsi reçus ;
- une étape de recherche dans une première base de données (BDP) d'informations de position géographique desdites bornes d'accès à partir de leurs identifiants respectifs ;
- une première étape d'estimation d'une information de position du terminal à partir au moins des informations de position géographique desdites bornes d'accès, ladite information de position étant la position de ce terminal ou bien une zone dans laquelle il se trouve, dite zone de positionnement.

Elle comprend en outre :
- une étape d'extraction, à partir d'une seconde base de données (SIG), d'informations topographiques relatives à une zone autour de la position ainsi estimée ou à la zone de positionnement ainsi estimée, ladite seconde base de données comprenant une modélisation topographique de cette zone sous la forme d'une liste d'objets classés en catégories, chaque objet étant défini par des données attributives comprenant la catégorie à laquelle elle appartient, des données géométriques et des données géographiques ;
- une seconde étape d'estimation de la position du terminal utilisant les informations topographiques ainsi extraites.

Selon un premier mode de réalisation, la seconde étape d'estimation comprend une pondération, à l'aide de coefficients obtenus à partir des informations topographiques ainsi extraites, soit de ladite position du terminal et d'une seconde position obtenue à l'aide d'une méthode de positionnement satellitaire, soit de mesures de signaux reçus des bornes d'accès d'une part et de mesures de signaux d'un système de positionnement satellitaire d'autre part.

Selon une variante du premier mode de réalisation, la seconde étape d'estimation comprend :
- une étape de sélection, à partir des informations topographiques ainsi extraites, parmi une première méthode de positionnement à l'aide des signaux reçus desdites bornes d'accès, une seconde méthode de positionnement à l'aide de signaux reçus d'un système de positionnement satellitaire, ou une troisième méthode de positionnement hybride utilisant à la fois les premiers et les seconds ;
- une étape de détermination de la position du terminal au moyen de la méthode ainsi sélectionnée.

L'étape de sélection de la méthode de positionnement peut en outre utiliser une information horaire du terminal et des paramètres de description des orbites des satellites dudit système de positionnement.

La seconde base de données peut avantageusement comprendre une information de sélection de la méthode de positionnement pour une pluralité de points d'une zone géographique.

Alternativement, la seconde base de données peut comprendre, pour chaque point de ladite pluralité, ladite information de sélection associée à une information horaire.

Avantageusement, si la première méthode de positionnement est sélectionnée, les moyens matériels et/ou logiciels propres à la mise en oeuvre de la seconde méthode de positionnement sont mis en état de veille et, si la seconde méthode de positionnement est sélectionnée, les moyens matériels et/ou logiciels propres à la mise en oeuvre de la première méthode de positionnement sont mis en état de veille.

La première méthode de positionnement peut être sélectionnée pour déterminer la position du terminal le long d'un premier axe et la seconde méthode de positionnement est sélectionnée pour déterminer la position du terminal le long d'un second axe distinct du premier.

Selon un second mode de réalisation, le terminal détermine à partir des données topographiques de la seconde base de données, des caractéristiques des canaux de propagation entre des bornes d'accès détectées et une pluralité de points de ladite zone, et en déduit pour chacune de ces bornes une puissance théorique en chacun de ces points.

La seconde étape d'estimation peut alors avantageusement déterminer la position du terminal en recherchant parmi lesdits points celui qui minimise une fonction de coût dépendant de l'écart entre les puissances théoriques en un point et les puissances des signaux reçus des bornes d'accès.

Selon un troisième mode de réalisation, la première base de données (BDP) contient, pour chaque borne d'accès, une information de position géographique incluant sa position géographique et des données décrivant une zone d'incertitude autour de cette position.

La position du terminal peut alors être avantageusement déterminée à partir d'une pondération des positions géographiques respectives des bornes d'accès détectées par ledit terminal au moyen de coefficients de pondération, lesdits coefficients étant obtenus par une fonction croissante des puissances d'émission des bornes ainsi détectées et une fonction décroissante des surfaces de leurs zones d'incertitudes respectives.

La première base de données peut être préalablement constituée à partir d'un fichier donnant pour chaque borne d'accès son adresse postale de déploiement, et l'on attribue à chaque borne d'accès une position géographique à partir d'informations topographiques relatives à cette adresse stockées dans la seconde base de données.

Les informations topographiques relatives à ladite adresse donnent de préférence l'empreinte bidimensionnelle du bâtiment se trouvant à cette adresse et la position de la borne d'accès est alors calculée comme le barycentre de cette empreinte.

Alternativement, les informations topographiques relatives à ladite adresse donnent l'empreinte bidimensionnelle du bâtiment se trouvant à ladite adresse et, si le bâtiment possède plusieurs adresses *A*₁*,A*₂*,...,A_{K}* de positions géographiques respectives *P*₁*,P*₂*,...,P_{K}'* on détermine le diagramme de Voronoï des points situés en ces positions, la position géographique de la borne d'accès étant calculée comme un barycentre de l'intersection de ladite empreinte bidimensionnelle avec la cellule de Voronoï du point associé à ladite adresse.

La première base de données peut être constituée à partir d'un ensemble initial de bornes d'accès, et une borne d'accès n'appartenant pas au dit ensemble peut être identifiée et localisée à l'aide des signaux reçus par au moins trois bornes d'accès y appartenant, l'identifiant et la position de cette borne d'accès étant ensuite stockés dans la première base de données.

Dans un exemple de réalisation, lorsque la première estimation fournit une zone de positionnement d'un terminal non connexe ou bien ayant une surface supérieure à un certain seuil, une erreur d'estimation est diagnostiquée.

Dans ce cas, on peut rechercher parmi les bornes d'accès prises en compte dans la première étape d'estimation, celle ayant conduit à ladite erreur et on peut la supprimer de la première base de données.

Dans un mode de réalisation permettant d'améliorer la précision de la première base de données, on stocke de manière centralisée les traces d'une pluralité de terminaux, une trace d'un terminal étant définie comme l'ensemble des identifiants de bornes détectées dans la première étape pendant une durée déterminée.

La seconde base de données définit avantageusement un espace de positions autorisées ainsi qu'un espace de positions interdites pour ladite pluralité de terminaux, les positions géographiques des bornes d'accès sont optimisées à l'intérieur de leurs zones d'incertitudes respectives, l'optimisation étant réalisée en minimisant en moyenne une fonction de coût sur l'ensemble des traces, ladite fonction de coût dépendant de l'écart d'une trace à l'espace des positions autorisées.

### BRÈVE DESCRIPTION DES DESSINS

D'autres caractéristiques et avantages de l'invention apparaîtront à la lecture de modes de réalisation préférentiels de l'invention en référence aux figures jointes parmi lesquelles :
La Fig. 1 illustre schématiquement le principe de la méthode de positionnement selon l'invention ;
Les Figs. 2A et 2B illustrent respectivement des exemples de représentation monodimensionnelle et de représentation bidimensionnelle dans la base de donnée topographiques ;
La Fig. 3 illustre schématiquement une méthode de positionnement avec amélioration de la précision des positions des bornes d'accès.

### EXPOSÉ DÉTAILLÉ DE MODES DE RÉALISATION PARTICULIERS

Nous considérerons de manière générale un espace donné dans lequel est déployé au moins un réseau de système de télécommunication sans fil. De manière préférentielle, ce réseau peut être de type Wi-Fi, c'est-à-dire conforme à l'une des normes 802.11 a/b/g/n etc. Alternativement, il peut être un réseau WPAN (*Wireless Personal Area Network*) de type Bluetooth (IEEE 802.15.1, IEEE 802.15.2, IEEE 802.15.3, IEEE 802.15.4) ou ZigBee (couches physiques et MAC IEEE 802.15.4), un réseau WMAN (*Wireless Metropolitan Area Network*) de type WiMax (IEEE 802.16) ou encore un réseau UWB (IEEE 802.15.4a).

Plusieurs réseaux de même type (par exemple dépendant d'opérateurs différents) ou de types distincts peuvent également être envisagés dans le cadre de la présente invention. Nous supposerons toutefois dans la suite, pour des raisons de simplification et sans préjudice de généralisation, que les réseaux en question sont de type Wi-Fi.

Comme on le sait, un réseau de type Wi-Fi comporte des bornes d'accès installées chez des particuliers et/ou dans des espaces publics permettant à un terminal disposant d'un modem IEEE 802.11 a/b/g/n de se connecter au réseau. Un tel terminal scanne les bornes à sa portée, soit de manière automatique, soit sur simple requête. Le scan peut être passif (réception de messages périodiques émis par les bornes d'accès), soit de manière active (émission d'un message de requête et réception de la réponse émise par la borne d'accès). Il peut ainsi obtenir une liste des bornes d'accès environnantes avec pour chacune son adresse MAC encore dénommée BSSID (*Basic Service Set Identifier*) et le cas échéant une indication du niveau de puissance du signal reçu ou RSS (*Received Signal Strength*), ce indépendamment du fait qu'il puisse se connecter ou non à cette borne. De manière générale, pour un réseau quelconque, le terminal sera capable d'extraire à partir des signaux reçus des différentes bornes d'accès, leurs identifiants respectifs. On appelle ici identifiant d'une borne une adresse associée de manière biunivoque à cette borne.

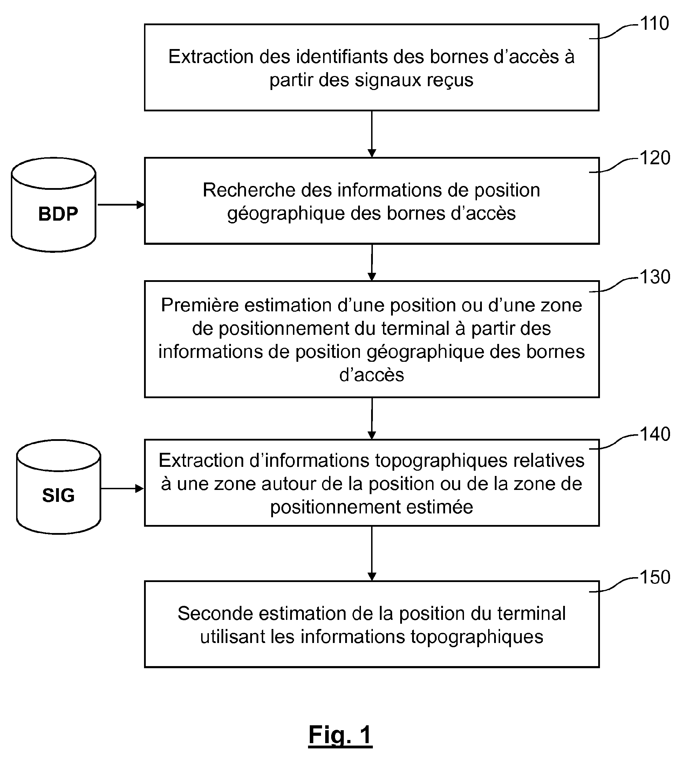

La Fig. 1 représente de manière schématique le principe de la méthode de positionnement selon l'invention.

Dans une première étape, 110, comme décrit plus haut, le terminal balaie les canaux WLAN et extrait des signaux reçus les identifiants des bornes d'accès avoisinantes. De manière optionnelle, il mesure également les puissances respectives des signaux reçus (RSS) de ces bornes.

Dans une seconde étape, 120, on recherche dans une base de données, notée BDP, des informations de position relatives à chacune de ces bornes. Les informations de position relatives à une borne peuvent se réduire à sa position géographique, par exemple la latitude et la longitude du lieu où elle est située. Elles peuvent alternativement représenter, de manière plus détaillée, la distribution de puissance du signal émis par la borne, selon un maillage prédéterminé autour de celle-ci. En sus de la position géographique, la base de données BDP peut comprendre pour chaque borne ou certaines d'entre elles seulement, une indication de la puissance émise par cette borne et, le cas échéant, un modèle de propagation du signal émis, représenté par exemple sous forme de paramètres de propagation. La manière dont la base BDP est constituée sera décrite plus loin.

Cette recherche d'informations de position peut être effectuée par le terminal lui-même si la base BDP est stockée localement ou bien par un serveur distant hébergeant la base de données.

Dans le premier cas, la base BDP peut résider soit dans une mémoire du terminal, soit dans une carte mémoire séparée. Par exemple, la carte mémoire peut contenir la base BDP relative à une ville donnée. La base BDP peut alternativement être téléchargée en tout ou partie par le terminal. Par exemple, si l'utilisateur connaît son itinéraire, il pourra télécharger sur son terminal un extrait de la base BDP correspondant à l'itinéraire prévu. Alternativement, le terminal peut transmettre au serveur hébergeant la base BDP une requête de téléchargement d'une partie de cette base, la requête ayant pour argument un ou plusieurs identifiants des bornes détectées. La partie de la BDP renvoyée par le serveur au terminal couvre alors une zone géographique déterminée par le serveur à partir d'une position déduite de la position des identifiants envoyés dans la requête et d'un critère d'étendue prédéterminé ou dépendant d'un paramètre de la requête. De manière générale, la partie de la BDP qui doit être renvoyée au terminal peut également être déterminée à l'aide d'une méthode de localisation grossière.

Dans le second cas, c'est-à-dire lorsque la base BDP réside sur le serveur, le terminal transmet à ce dernier une requête de recherche ayant pour arguments les identifiants des bornes détectées. Le serveur peut alors retourner le résultat de cette recherche au terminal.

Le cas échéant, la base BDP peut être distribuée sur plusieurs serveurs, par exemple du type SMLC (Serving Mobile Location Center) tel que décrit dans la spécification technique 3GPP TS 43.059 intitulée « 3GPP Technical Specifications Group ERAN ; Functional Stage 2, description of Location Services (LCS) in GERAN » ou bien de type GMLC (Gateway Mobile Location Center) tel que décrit dans la spécification technique 3GPP TS 23.271 intitulée « 3GPP Technical Specification Group Services and System Aspects ; Functional Stage 2, description of Location Services (LCS) ». Le serveur peut être encore de type SLP (SUPL Location Platform) tel que défini dans le document « Secure User Plane Location Architecture », Candidate version 1.0, 27 Jan. 2006, OMA-AD-SUPL-V1_0-20060127-C, Open Mobile Alliance.

La base de données BDP comprend au moins une liste des identifiants des bornes d'accès avec leurs informations géographiques, par exemple leurs positions géographiques. Ces identifiants peuvent être regroupés par réseau ou SSID (*Service Set Identifier*), ou par zones géographiques. Lorsque la base de données est stockée dans le terminal, celle-ci est avantageusement compressée par un algorithme de compression connu en soi, par exemple un codage de Ziv-Lempel. En outre, on utilisera avantageusement un codage relatif pour coder les positions géographiques des bornes, par exemple en choisissant une référence au centre de l'espace considéré.

A l'étape 130, on procède à une première estimation d'une information de position du terminal. Cette information peut donner la position du terminal ou une indication grossière de celle-ci. L'estimation peut être effectuée par le serveur ou bien directement par le terminal, soit parce que la base BDP y est stockée, soit encore parce que les positions géographiques des bornes d'accès détectées lui ont été préalablement transmises par le serveur.

L'estimation de la position du terminal consiste par exemple à déterminer le barycentre d'une zone d'incertitude contenant les bornes d'accès dont les puissances reçues sont supérieures à un certain seuil.

Elle peut alternativement consister à calculer le barycentre des positions géographiques des bornes d'accès, pondérées par les puissances reçues ou par des indicateurs de ces puissances.

Si les puissances d'émission des bornes d'accès sont renseignées dans la base ou bien si les puissances nominales d'émission sont connues pour chaque réseau (c'est-à-dire pour chaque SSID) ou bien en fonction du type de la borne (donnée par le BSSID), la position du terminal pourra être estimée comme le barycentre des positions géographiques des bornes d'accès, pondérées par les rapports de puissance reçue sur puissance d'émission de chacune de ces bornes ou bien encore par des facteurs de pondération fonction de ces rapports.

Dans le cas plus complexe où la base BDP contient la distribution de puissance autour de chaque borne, la position du terminal est déterminée en minimisant une fonction de coût dépendant de l'écart entre les puissances des signaux reçus et les puissances stockées. Par exemple, la fonction de coût peut être la somme quadratique de ces écarts de puissance pour les bornes détectées par le terminal. La position du terminal est alors donnée par le point minimisant ladite fonction de coût.

Une situation hybride est celle où la base BDP contient les positions géographiques des bornes d'accès et les paramètres d'un modèle de propagation permettant de calculer la distribution de puissance autour de chaque borne. On peut alors déterminer la position du terminal en utilisant l'une ou l'autre des méthodes ci-dessus.

Comme indiqué plus haut, l'information de position peut simplement donner une indication grossière de la position du terminal, c'est-à-dire une zone contenant la position du terminal, dénommée ci-après zone de positionnement.

Cette zone de positionnement peut être constituée par l'enveloppe convexe définie par les positions de toutes les bornes d'accès détectées. Par borne d'accès détectée, on entend une borne pour laquelle la puissance de signal reçu du terminal est supérieure à un seuil prédéterminé.

Selon une première variante, la zone de positionnement peut être constituée par l'union des zones de visibilité relatives aux bornes détectées. Par zone de visibilité d'une borne d'accès, on entend une zone dans laquelle un terminal peut recevoir un signal d'une puissance supérieure à un certain seuil (non nécessairement identique au seuil précité). La zone de visibilité de chaque borne peut être soit directement renseignée dans la base BDP, soit déduite d'un modèle de propagation dont les paramètres auront été préalablement stockés dans cette base.

Selon une seconde variante, la zone de positionnement est définie comme l'intersection des zones de visibilité relatives aux bornes détectées par le terminal. Si cette intersection est vide, le terminal peut opter alors pour une zone de positionnement du type enveloppe convexe ou union de zones de visibilité.

Selon une troisième variante, la zone de positionnement est définie par une zone rectangulaire, définie dans un repère géographique local ou encore suivant des coordonnées globales dans un référentiel pouvant être de type WGS84 (latitude, longitude et optionnellement altitude) englobant l'ensemble des positions des bornes d'accès détectées.

La base BDP est susceptible d'être construite de manière à classer les positions des bornes d'accès par dalles géographiques réalisant un pavage de la zone considérée. Dans ce cas, la zone de positionnement peut être donnée par l'union des dalles contenant chacune au moins une des bornes d'accès détectées, ou si l'on souhaite une estimation de position plus précise, par l'intersection de ces dalles.

Il convient de noter que la base BDP est susceptible de contenir des erreurs, par exemple si la position d'une borne d'accès a changé depuis la dernière mise à jour de la base. On pourra avantageusement rejeter une telle borne d'accès lorsqu'elle conduit à une zone de positionnement de surface trop importante ou non connexe, ou bien encore vide. Dans une telle situation, on rejettera par exemple la borne d'accès dont la position est la plus éloignée du barycentre des bornes d'accès détectées.

L'estimation d'information de position 130 peut également prendre en compte des informations de position passées, pour réduire le taux d'erreur. Par exemple, la position du terminal pourra être obtenue au moyen d'un filtrage des positions du terminal estimées à des instants successifs. Le filtrage peut être réalisé à l'aide d'un filtre récursif avec un facteur d'oubli. En outre, une ou plusieurs des informations de position passées pourront avoir été obtenues à l'aide d'une autre méthode de positionnement telle qu'une méthode de positionnement par satellite ou par identification de cellule d'un réseau de télécommunication sans fil.

Dans la suite, nous dénommerons APPS (*Access Point Positioning System*) un système utilisant un positionnement au moyen de bornes d'accès, telle qu'à l'étape 130 décrite ci-dessus.

A l'étape 140, on recherche dans une seconde base de données, notée SIG, des informations topographiques relatives à une zone autour de la position du terminal estimée à l'étape 130 ou bien à la zone de positionnement du terminal estimée à cette même étape.

La base de données SIG comprend une modélisation topographique de cette zone, c'est-à-dire une liste d'objets situés dans celle-ci et classés par catégories. Chaque objet est défini par des données attributives, des données géométriques et des données géographiques. Les données géométriques décrivent la forme géométrique de l'objet (un point, un segment, un ensemble de segments, un polyèdre, etc.), les données géographiques définissent sa position géographique. A titre d'exemple, les différentes catégories envisagées peuvent être voirie, trottoir, pont, bâtiment, cour, parc, zone verte, forêt, élément aquatique, point d'intérêt (POI), etc. Chaque catégorie peut être subdivisée en sous-catégories. Par exemple, la catégorie voirie est divisée en autoroute, route nationale, route départementale, avenue, rue impasse, voie piétonne, voie ferrée, etc. Les données attributives d'un objet comprennent entre autres la catégorie et la sous-catégorie auxquelles il appartient.

Un objet peut être encore défini dans la base SIG par des données supplémentaires telles que le nom d'un segment de voirie, l'adresse d'un bâtiment, etc.

A l'aide des informations topographiques de la zone en question, le terminal ou le cas échéant le serveur distant, procède à une nouvelle estimation de sa position.

Selon un premier mode de réalisation de l'invention, les informations topographiques de la base SIG sont utilisées pour sélectionner la méthode de positionnement la plus appropriée parmi : une méthode de positionnement à l'aide des bornes d'accès (APPS), une méthode de positionnement à l'aide d'un système satellitaire (SPS), ou une méthode de positionnement hybride, cette dernière pouvant elle-même se décliner sous la forme d'une hybridation, dite serrée, c'est-à-dire intervenant au niveau de l'exploitation faite des signaux reçus (SPS et APPS) ou bien d'une hybridation, dite lâche, c'est-à-dire intervenant au niveau des positions obtenues par ces deux méthodes. Dans le cas où une méthode de positionnement hybride est choisie, les informations topographiques de la base SIG sont utilisées pour ajuster des coefficients de pondération appliqués aux positions obtenues par les méthodes SPS et APPS dans le cas de l'hybridation lâche, ou appliqués aux mesures réalisées par les méthodes SPS et APPS dans le cadre de l'hybridation serrée.

La sélection peut se faire selon différents critères pris isolément ou en combinaison.

Un premier critère est le caractère « dégagé » ou non de la zone considérée. Par exemple, si cette zone correspond à une portion d'avenue, à une place, à un parc, le système de positionnement satellitaire sera préféré. A l'inverse, si la zone correspond à une rue et a *fortiori* si les bâtiments adjacents sont élevés, on préférera le système de positionnement APPS. La sélection se fera par exemple à partir des données attributives précitées. L'orientation des rues peut également être un élément constitutif de ce premier critère, les performances du système SPS étant statistiquement plus ou moins élevées selon cette orientation. Si l'on prédit de mauvaises performances de localisation compte tenu de l'orientation de la rue et de la configuration satellitaire, on optera pour le système de positionnement APPS.

Un second critère est le nombre de satellites vus en ligne directe ou LOS (*Line Of Sight*) par le terminal à l'instant de l'estimation. Pour déterminer si un satellite est occulté ou non, on utilise les données géométriques des bâtiments autour de la première position estimée, une table de paramètres de description des orbites (éphémérides, almanachs) du système satellitaire et une information de date. Si le nombre de satellites en LOS est inférieur à un certain seuil, on optera pour le positionnement APPS. On pourra le cas échéant utiliser une méthode de positionnement hybride et attribuer un poids plus important au positionnement APPS lorsque le nombre de satellites en LOS est inférieur à un certain seuil.

Un troisième critère est celui de la dilution géométrique ou GDOP (*Geometric Dilution Of Precision*) relative aux satellites vus en ligne directe du terminal. On rappelle que cette dilution géométrique est faible dans une configuration où les satellites ont des positions angulaires éloignées les unes des autres et qu'à l'inverse, elle est élevée dans une configuration où les satellites ont des positions angulaires rapprochées. Pour calculer la valeur de GDOP, on utilise une table de paramètres de description des orbites (éphémérides, almanachs) du système satellitaire et une information de date. On peut également exclure du calcul les satellites ayant été déclarés non visibles en ligne directe. Si la dilution géométrique est supérieure à un seuil prédéterminé, on préfèrera utiliser le positionnement APPS.

Un quatrième critère est le profil des canaux de propagation entre les bornes d'accès et le terminal. Compte tenu des positions respectives de celles-là et de la position estimée de ce dernier, on utilise la modélisation topographique de la zone pour prédire les caractéristiques de propagation des différents canaux. On pourra par exemple prédire si un canal est de type multi-trajet ou mono-trajet, ou la valeur du coefficient d'atténuation d'un trajet/d'un canal ou encore la variance de la distribution spatiale de puissance pour l'une au moins des bornes détectées. Si ces canaux ont des caractéristiques défavorables (multi-trajet, forte atténuation, variance élevée) le système de positionnement satellitaire ou hybride sera préféré.

Un cinquième critère est celui de la distribution angulaire des points d'accès vus en ligne directe par le terminal. On comprend en effet que la précision du positionnement aux moyens des bornes d'accès sera d'autant meilleure que celles-ci auront des positions angulaires éloignées les unes des autres. Si la précision est suffisante, le système de positionnement APPS est sélectionné.

Un sixième critère n'utilisant pas les informations topographiques de la base SIG peut être combiné aux précédents, à savoir celui de la densité de points d'accès dans la zone en question. Cette densité est simplement calculée à partir des coordonnées des bornes d'accès et des limites de la zone, par exemple en déterminant pour chaque borne de la base BDP si sa latitude et sa longitude sont respectivement comprises dans des intervalles qui en définissent les limites. Si la densité de bornes d'accès est supérieure à un premier seuil, on utilise la méthode de positionnement APPS. Si elle est inférieure à un second seuil, on utilise la méthode de positionnement SPS. Si elle est comprise entre les premier et second seuils, on utilise une méthode de positionnement hybride. On notera que ces calculs peuvent être faits une fois pour toutes ou à chaque mise à jour de la base BDP. Dans ce cas les résultats des calculs peuvent être stockés dans la base SIG, sous la forme de zones de positionnement (catégorie), appartenant à trois sous-catégories : zone à positionnement satellitaire, zone à positionnement par bornes d'accès, zone à positionnement hybride. Dans ce dernier cas, le type d'hybridation lâche ou serrée pourra être également précisé.

Enfin, la méthode de positionnement choisie peut être distincte selon différents axes. Plus précisément si le terminal se trouve à un carrefour entre deux rues et si l'une d'entre elles présente une forte densité de bornes alors que l'autre en présente une faible mais offre en revanche une bonne visibilité de nombreux satellites à faible élévation, l'algorithme de calcul de la position peut être scindé en deux sous-algorithmes indépendants correspondant respectivement au calcul de la position selon l'axe de la première rue et l'axe de la seconde rue, le premier utilisant les signaux émis par les bornes d'accès et le second les signaux satellitaires. Cette décomposition en deux algorithmes de positionnement de types différents selon deux axes distincts peut également trouver à s'appliquer à des zones telles que de larges avenues, la position selon l'axe longitudinal de l'avenue étant alors déterminée par un algorithme d'un premier type et la position selon son axe transversal étant déterminée par un algorithme d'un second type.

Selon une variante du premier mode de réalisation, la sélection de la méthode de positionnement est utilisée pour réduire la consommation électrique du terminal. Plus précisément, si la méthode de positionnement par bornes d'accès est sélectionnée, les moyens logiciels et matériels propres au positionnement satellitaire (par exemple le récepteur GPS) sont mis en veille, seules les informations nécessaires à un redémarrage rapide en cas de besoin étant avantageusement conservées en mémoire. Réciproquement, si la méthode de positionnement satellitaire est sélectionnée, les moyens logiciels et matériels propres au positionnement par bornes d'accès sont mis en veille. Dès que le critère de sélection n'est plus rempli, ces moyens sont réactivés. Le cas échéant, les moyens mis en veille peuvent être périodiquement réactivés pour vérifier si le critère de sélection est toujours rempli. La période d'activation est avantageusement une fonction décroissante de la vitesse de déplacement du terminal.

Selon un second mode de réalisation de l'invention, les informations topographiques stockées dans la base de données SIG sont utilisées pour déterminer les caractéristiques du canal entre chaque borne d'accès détectée et le terminal, notamment les coefficients de propagation et les temps de retard des différents trajets. Ces caractéristiques permettent de calculer la puissance théorique que devrait recevoir le terminal en différents points de la zone autour de sa position estimée. Avantageusement, cette zone est maillée et une fonction de coût dépendant des écarts entre puissance reçue et puissance calculée, pour les différentes bornes d'accès détectées par le terminal, est minimisée sur les noeuds du maillage. Par exemple, la fonction de coût sera définie par une somme quadratique de ces écarts. La seconde estimation de la position du terminal est finalement donnée par la position du noeud minimisant cette fonction de coût.

Selon un troisième mode de réalisation, les positions géographiques des différentes bornes d'accès détectées par le terminal sont affectées de zones d'incertitude, déterminées comme décrit en détail plus loin. Les informations géographiques de la base BDP comprennent alors pour chaque borne d'accès, sa position géographique et les données définissant la zone d'incertitude de cette position.

Lorsque la position du terminal est déterminée par un calcul barycentrique (puissances reçues, rapports entre puissances émises et reçues), les coefficients de pondération peuvent être modifiés par un facteur correctif tenant compte de la taille de zone d'incertitude. Plus précisément, le coefficient de pondération relatif à une borne d'accès dont la zone d'incertitude est importante sera augmenté et celui relatif à une borne d'accès de faible zone d'incertitude sera en contrepartie diminué. En règle générale, les coefficients de pondération seront définis par une fonction croissante des puissances d'émission des bornes et une fonction décroissante des surfaces respectives de leurs zones d'incertitude.

De la même façon, pour un calcul de position au moyen d'une fonction de coût, le coefficient pondérant l'écart quadratique entre puissances reçue et calculée pourra être corrigé à la hausse ou à la baisse suivant que la surface de la zone d'incertitude de la borne d'accès est faible ou importante.

Selon un quatrième mode de réalisation de l'invention, les données topographiques de la base SIG permettent de déterminer les zones accessibles ou inaccessibles à l'utilisateur du terminal. Par zone accessible (ou autorisée) en entend une zone où un utilisateur peut physiquement se trouver. A défaut la zone est inaccessible (ou interdite).

Si la position estimée à l'étape 130 tombe dans une zone autorisée, cette position reste inchangée. En revanche, si elle tombe dans une zone non autorisée, le point correspondant à cette position est projeté dans l'espace des positions autorisées. Autrement dit, la seconde estimation de position est donnée par les coordonnées du point autorisé le plus proche du point non autorisé.

Selon une variante, l'utilisateur pourra avantageusement déclarer son mode de déplacement : automobile, piéton, vélo, train etc. Pour chaque mode de déplacement, la base SIG fournira les zones accessibles ou inaccessibles à l'utilisateur. Par exemple en mode de déplacement automobile, les empreintes bidimensionnelles des bâtiments seront considérées comme interdites, en mode de déplacement ferroviaire seules les voies de chemin de fer sont autorisées.

Nous décrirons ci-après comment la base de données BDP peut être constituée et/ou mise à jour.

Selon une première variante, la base BDP est préalablement constituée à partir de fichiers des opérateurs fournissant l'adresse de déploiement de chaque borne d'accès. De manière générale, chaque opérateur dispose d'un fichier dans lequel sont recensés les noms et adresses postales des clients, dites aussi adresses de déploiement, ainsi que les caractéristiques du matériel installé à chacune des adresses, notamment l'identifiant (par exemple l'adresse MAC ou le BSSID) d'une borne d'accès lorsqu'elle est présente.

Si la base de données SIG contient les adresses de bâtiments (données supplémentaires), on peut associer à chaque adresse de déploiement une position géographique comme on le verra plus loin. On obtient alors pour chaque réseau, une liste des identifiants des bornes d'accès avec leurs positions géographiques respectives, en d'autres termes les informations constitutives de la base BDP.

Selon le type de représentation des adresses postales dans la base de données, le calcul de la position géographique d'une borne d'accès peut différer.

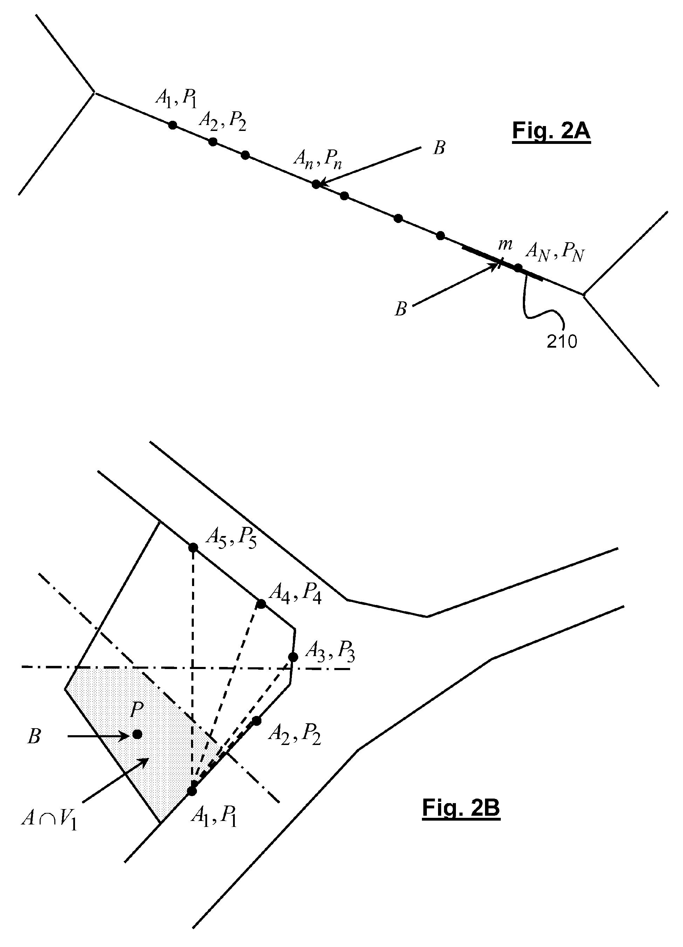

Si les adresses sont représentées par de simples points le long d'un filaire de voirie, comme illustré en Fig. 2A, la position géographique de la borne est simplement celle du point en question. Si l'adresse est manquante, elle est avantageusement déterminée par interpolation entre adresses successives d'un même côté de la voirie (par exemples paires ou impaires), à condition toutefois que celles-ci appartiennent à un même segment de voirie.

Si les bâtiments sont représentés de manière monodimensionnelle le long du filaire de voirie, la position géographique de la borne sera définie comme le milieu du segment représentant l'immeuble.

Avantageusement, une zone d'incertitude en position est déterminée pour chaque borne d'accès. Dans le premier type de représentation précité, la zone d'incertitude est déterminée comme le segment de voirie dont les extrémités sont données par l'adresse qui précède et l'adresse qui suit celle de déploiement de la borne, sur le même côté de la voirie. Dans le second type de représentation précité, la zone d'incertitude est simplement déterminée par le segment représentant l'immeuble.

Si les immeubles sont représentés de manière bidimensionnelle dans la base SIG, comme illustré en Fig. 2B, la position de la borne d'accès peut être calculée comme le barycentre de l'empreinte bidimensionnelle de l'immeuble à l'adresse de déploiement. La zone d'incertitude est alors déterminée corrélativement par le polygone définissant l'empreinte bidimensionnelle *A* de l'immeuble (représentée en grisé en Fig. 2B). Avantageusement, cette zone d'incertitude peut être réduite lorsque l'immeuble possède plusieurs adresses *A*₁*,A*₂*,...,A_{K}* associées aux positions géographiques respectives *P*₁,*P*₂,...,*P_{K}*. Dans ce cas, la zone d'incertitude associée à une borne d'adresse *Aₖ* est définie comme l'intersection entre l'empreinte bidimensionnelle *A* et la région de Voronoï *Vₖ* du point *Pₖ*. Cette zone d'incertitude réduite a été représentée en hachuré en Fig. 2B. La position P de la borne d'accès peut alors être calculée comme le barycentre de la zone *A*∩*Vₖ.*

Si les immeubles sont représentés de manière tridimensionnelle dans la base SIG, la zone d'incertitude peut être définie par le polyèdre de base *A* et de hauteur égale à la hauteur maximale voire à la hauteur moyenne de l'immeuble si cette information est renseignée dans SIG. Alternativement, la zone d'incertitude peut être définie par le polyèdre de base *A*∩*Vₖ* et de hauteur égale à la hauteur maximale ou moyenne de l'immeuble. Enfin, si les numéros d'étage sont renseignés dans la base SIG on pourra encore réduire la taille de la zone d'incertitude en ne considérant que la tranche horizontale du polyèdre correspondant à cet étage. Cela suppose toutefois que la hauteur des étages ou que le nombre d'étages ainsi que la hauteur de l'immeuble soient également indiqués dans la base SIG.

On constitue ainsi un enregistrement pour chaque borne d'accès comprenant son identifiant, sa position géographique et, le cas échéant, la zone d'incertitude associée. Cet enregistrement peut en outre comprendre d'autres caractéristiques de la borne d'accès, extraites du fichier de l'opérateur, notamment sa puissance d'émission, son diagramme de rayonnement, la bande de fréquence utilisée etc.

Après avoir été constituée, la base BDP peut être mise à jour au fur et à mesure des modifications des fichiers des opérateurs.

Selon une seconde variante, alternative ou complémentaire à la première, la base de données BDP peut être constituée, enrichie ou mise à jour au moyen d'une procédure de déclaration. Plus précisément, cette procédure permet à toute personne hébergeant une borne d'accès de déclarer volontairement sur un portail Web (géré par exemple par le service APPS), son adresse postale et les caractéristiques de la ou des borne (s) qu'il héberge.

Les positions géographiques et les zones d'incertitude peuvent ensuite être déterminées comme précédemment. Alternativement ou cumulativement, le client peut préciser sur le portail en question la position géographique de sa ou ses borne(s) d'accès. Pour ce faire, un extrait de la base SIG peut être affiché sur son écran sous forme d'une carte géographique, le cas échéant centrée sur son adresse si le client l'a préalablement fournie. Le client n'a alors plus qu'à cliquer sur la position géographique précise de la ou des borne (s), en relation avec leurs identifiants. Alternativement, la position géographique d'une borne peut être déterminée en faisant un scan des bornes environnantes. Si trois d'entre elles au moins sont déjà déclarées, la position de la borne pourra être obtenue sous forme de barycentre de leurs positions respectives, comme déjà exposé précédemment pour un terminal.

Les caractéristiques de la borne peuvent être saisies soit manuellement par le client, soit automatiquement, à partir d'un scan effectué par le modem de l'ordinateur. Dans ce dernier cas, le client n'a plus alors qu'à sélectionner dans la liste des bornes détectées, celle(s) qui sont situées chez lui. L'identifiant et, le cas échéant, d'autres caractéristiques de la borne sélectionnée est (sont) alors directement détecté(s) par le modem. A chaque borne sélectionnée, le portail peut proposer au client de préciser sa position géographique sur une carte.

La base de données BDP peut être enrichie de proche en proche à partir d'un ensemble initial de bornes d'accès. En effet, ces bornes peuvent identifier et localiser les bornes avoisinantes appartenant ou non au même réseau. Il suffit pour ce faire que trois bornes d'accès de l'ensemble initial ou enrichi puissent identifier et mesurer les puissances des signaux reçus (RSS) de cette borne. La nouvelle borne identifiée et localisée est ensuite intégrée dans la base de données.

En tout état de cause, la précision de la base BDP ainsi constituée peut être ensuite améliorée comme décrit ci-après.

On suppose, dans ce mode de réalisation, que la base BDP est hébergée par un serveur et que celui-ci stocke de manière centralisée les traces des utilisateurs du système de positionnement. On appelle ici trace d'un utilisateur (ou d'un terminal) l'ensemble des identifiants des bornes d'accès détectées, et avantageusement leurs RSS ainsi qu'une information de temps associée à chaque détection/mesure. Ces données peuvent être accompagnées des positions géographiques prises par cet utilisateur pendant une durée donnée, telles qu'elles ont été estimées par le système de positionnement. A défaut, ces positions peuvent être recalculées par le serveur.

On suppose également que l'on a renseigné, soit implicitement soit explicitement, les zones autorisées/interdites dans la base SIG, le cas échéant en fonction du mode de déplacement utilisé.

On supposera enfin que les positions géographiques estimées n'ont pas fait l'objet d'une projection dans l'espace des zones autorisées. A défaut, on ne prendra en compte que les traces ou les portions de trace n'ayant pas fait l'objet d'un tel traitement.

L'amélioration de la précision est obtenue en recherchant au sein des zones d'incertitude les positions des bornes qui minimisent en moyenne une fonction de coût sur l'ensemble des traces disponibles. De préférence, cette fonction de coût mesure pour chaque trace l'écart à l'espace des points autorisés, en tenant compte, le cas échéant, du mode de déplacement sélectionné. Autrement dit, on teste si une modification des positions des bornes d'accès à l'intérieur de leurs zones d'incertitude respectives conduit à des traces incluses ou à défaut plus proches de l'espace des points autorisés. Par exemple, on teste si une telle modification permet d'obtenir des traces comprises à l'intérieur des zones de voirie lorsqu'elles sont relatives à un déplacement en automobile.

L'amélioration de précision peut aussi consister à supprimer une ou plusieurs bornes de la base BDP si la suppression de ces bornes conduit, sur un nombre représentatif de traces, à un minimum significativement plus faible de la fonction de coût. Ceci permet en particulier d'éliminer de la base BDP les bornes dont la position a changé depuis la dernière mise à jour.

Une amélioration de précision peut également être obtenue, alternativement ou en combinaison avec les méthodes précédentes, par une minimisation de la fonction de coût en cherchant à ajuster les paramètres de propagation individuels des bornes d'accès ou encore les valeurs de puissance prédites sur un maillage de l'espace dans la base BDP.

Pour simplifier le processus d'optimisation, on peut se contenter d'une optimisation locale et l'effectuer de proche en proche. L'optimisation locale consiste à ne prendre en compte les traces qu'à l'intérieur d'une zone restreinte et de ne rechercher les positions optimales des bornes que pour celles intervenant dans le calcul des traces en question. Par exemple, on pourra ne prendre en compte que des traces à l'intérieur ou proches d'une voie de circulation et, corrélativement, seules les bornes d'accès voisines de cette voie.

On notera en outre que si une portion de trace a été déterminée exclusivement à l'aide d'un positionnement satellitaire (sans hybridation), cette portion sera considérée comme un invariant et pourra donc sortir du calcul de la fonction de coût.

L'optimisation elle-même peut être effectuée selon un algorithme connu en soi, par exemple à l'aide d'une méthode de recuit simulé, une méthode de descente de gradient, une méthode de descente de gradient stochastique, etc.

L'optimisation des positions des bornes d'accès peut être réalisée en plusieurs passes successives, le cas échéant en commençant par une passe d'optimisation locale et en terminant par une passe d'optimisation globale.

Elle peut être réalisée une fois pour toutes dès lors qu'une densité suffisante de traces a été obtenue. De préférence, elle est effectuée à intervalles réguliers, de manière à tenir compte d'une évolution possible des positions des bornes. Dans ce cas, l'optimisation peut ne porter que sur les traces les plus récentes ou bien prendre en compte les traces de dates différentes en les pondérant par des coefficients d'oubli.

La fonction de coût indiquée plus haut mesure l'écart entre une trace et l'espace des points autorisés. Elle peut également prendre en compte d'autres contraintes géométriques, cinétiques etc.

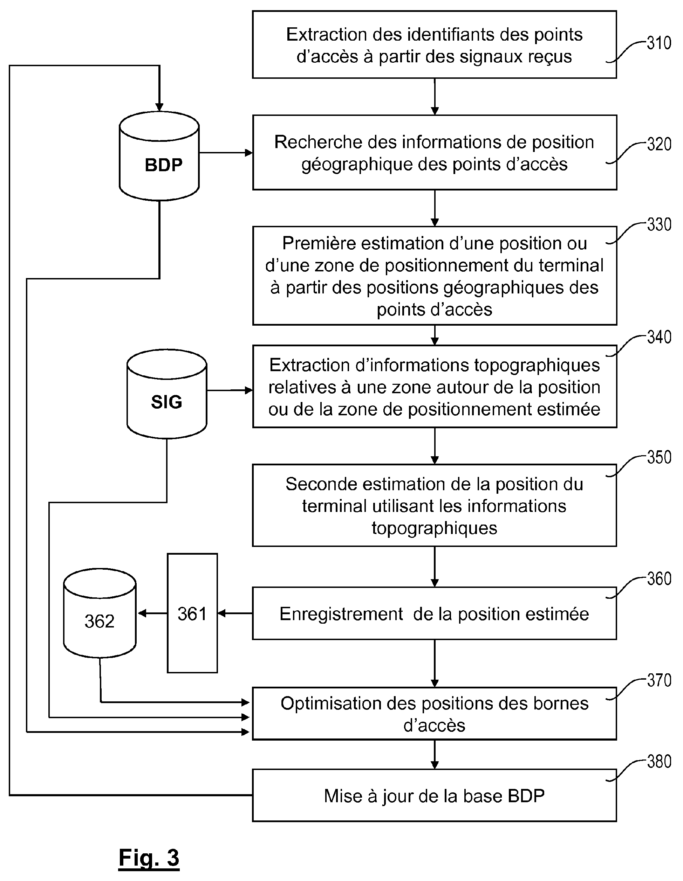

La Fig. 3 illustre schématiquement une méthode de positionnement selon un mode de réalisation de l'invention, dans laquelle la base de données BDP fait l'objet d'une amélioration de la précision.

Les étapes 310 à 350 sont identiques aux étapes 110 à 150 de la Fig. 1 et leur description ne sera donc pas reprise ici. A l'étape 360, la position estimée est stockée dans une mémoire tampon 361 du terminal ou du serveur selon que le calcul de la position du terminal est effectué par l'un ou par l'autre. Le contenu de la mémoire tampon est transféré à intervalles réguliers vers une mémoire de traces. On notera que la mémoire tampon est facultative dans la mesure où les positions successives du terminal peuvent être transmises au serveur et stockées dans sa mémoire de masse à chaque estimation.

Avantageusement, on enregistre pour chaque trace les informations suivantes :
- le type de déplacement sélectionné (optionnel)
- la date de la trace (optionnelle)
- les identifiants des bornes d'accès ayant servi au positionnement et pour chacune de ces bornes :
- les mesures de RSS faites sur les différentes bornes détectées (optionnelles)
- les instants auxquels les bornes d'accès ont été détectées et leurs RSS mesurés (optionnels)
- les positions géographiques estimées (à l'étape 350) (optionnelles)
- le type de positionnement (APPS, SPS, hybride et le cas échéant le type d'hybridation) (optionnel).

Lorsqu'un certain nombre de traces ou de nouvelles traces (depuis la dernière opération) ont été collectées dans la mémoire 362, les positions des bornes d'accès sont optimisées à l'étape 370 comme décrit précédemment. Cette étape nécessite un accès à la base BDP (positions initiales des bornes, zones d'incertitude des bornes), à la base SIG (espace des points autorisés) ainsi qu'à la mémoire de traces 362.

La base BDP est ensuite mise à jour à l'étape 380.

## Revendications

1. Méthode de positionnement d'un terminal à l'aide de signaux reçus d'une pluralité de bornes d'accès, comprenant :
- une étape d'extraction (110) d'identifiants desdites bornes d'accès à partir des signaux ainsi reçus ;
- une étape de recherche (120) dans une première base de données (BDP) d'informations de position géographique desdites bornes d'accès à partir de leurs identifiants respectifs ;
- une première étape d'estimation (130) d'une information de position du terminal à partir au moins des informations de position géographique desdites bornes d'accès, ladite information de position étant la position de ce terminal ou bien une zone dans laquelle il se trouve, dite zone de positionnement ;
**caractérisée en ce qu'**elle comprend en outre :
- une étape d'extraction (140), à partir d'une seconde base de données (SIG), d'informations topographiques relatives à une zone autour de la position ainsi estimée ou à la zone de positionnement ainsi estimée, ladite seconde base de données comprenant une modélisation topographique de cette zone sous la forme d'une liste d'objets classés en catégories, chaque objet étant défini par des données attributives comprenant la catégorie à laquelle elle appartient, des données géométriques et des données géographiques ;
- une seconde étape d'estimation (150) de la position du terminal utilisant les informations topographiques ainsi extraites.

2. Méthode de positionnement selon la revendication 1, **caractérisée en ce que** la seconde étape d'estimation comprend une pondération, à l'aide de coefficients obtenus à partir des informations topographiques ainsi extraites, soit de ladite position du terminal et d'une seconde position obtenue à l'aide d'une méthode de positionnement satellitaire, soit de mesures de signaux reçus des bornes d'accès d'une part et de mesures de signaux d'un système de positionnement satellitaire d'autre part.

3. Méthode de positionnement selon la revendication 1, **caractérisée en ce que** la seconde étape d'estimation comprend :
- une étape de sélection, à partir des informations topographiques ainsi extraites, parmi une première méthode de positionnement à l'aide des signaux reçus desdites bornes d'accès, une seconde méthode de positionnement à l'aide de signaux reçus d'un système de positionnement satellitaire, ou une troisième méthode de positionnement hybride utilisant à la fois les premiers et les seconds ;
- une étape de détermination de la position du terminal au moyen de la méthode ainsi sélectionnée.

4. Méthode de positionnement selon la revendication 3, **caractérisée en ce que** l'étape de sélection de la méthode de positionnement utilise en outre une information horaire du terminal et des paramètres de description des orbites des satellites dudit système de positionnement.

5. Méthode de positionnement selon la revendication 3, **caractérisée en ce que** la seconde base de données comprend une information de sélection de la méthode de positionnement pour une pluralité de points d'une zone géographique.

6. Méthode de positionnement selon la revendication 4, **caractérisée en ce que** la seconde base de données comprend pour chaque point de ladite pluralité ladite information de sélection associée à une information horaire.

7. Méthode de positionnement selon l'une des revendications 3 à 6, **caractérisée en ce que**, si la première méthode de positionnement est sélectionnée, les moyens matériels et/ou logiciels propres à la mise en oeuvre de la seconde méthode de positionnement sont mis en état de veille et que, si la seconde méthode de positionnement est sélectionnée, les moyens matériels et/ou logiciels propres à la mise en oeuvre de la première méthode de positionnement sont mis en état de veille.

8. Méthode de positionnement selon la revendication 3, **caractérisée en ce que** la première méthode de positionnement est sélectionnée pour déterminer la position du terminal le long d'un premier axe et que la seconde méthode de positionnement est sélectionnée pour déterminer la position du terminal le long d'un second axe distinct du premier.

9. Méthode de positionnement selon la revendication 1, **caractérisée en ce que** le terminal détermine, à partir des informations topographiques de la seconde base de données, des caractéristiques des canaux de propagation entre des bornes d'accès détectées et une pluralité de points de ladite zone, et qu'il en déduit pour chacune de ces bornes une puissance théorique en chacun de ces points.

10. Méthode de positionnement selon la revendication 9, **caractérisée en ce que** la seconde étape d'estimation détermine la position du terminal en recherchant parmi lesdits points celui qui minimise une fonction de coût dépendant de l'écart entre les puissances théoriques en un point et les puissances des signaux reçus des bornes d'accès.

11. Méthode de positionnement selon la revendication 1, **caractérisée en ce que** la première base de données (BDP) contient, pour chaque borne d'accès, une information de position géographique incluant sa position géographique et des données décrivant une zone d'incertitude autour de cette position.

12. Méthode de positionnement selon la revendication 11, **caractérisée en ce que** la position du terminal est déterminée à partir d'une pondération des positions géographiques respectives des bornes d'accès détectées par ledit terminal au moyen de coefficients de pondération, lesdits coefficients étant obtenus par une fonction croissante des puissances d'émission des bornes ainsi détectées et une fonction décroissante des surfaces de leurs zones d'incertitudes respectives.

13. Méthode de positionnement selon la revendication 1, **caractérisée en ce que** la première base de données est préalablement constituée à partir d'un fichier donnant pour chaque borne d'accès son adresse postale de déploiement, et que l'on attribue à chaque borne d'accès une position géographique à partir d'informations topographiques relatives à cette adresse stockées dans la seconde base de données.

14. Méthode de positionnement selon la revendication 13, **caractérisée en ce que** les informations topographiques relatives à ladite adresse donnent l'empreinte bidimensionnelle du bâtiment se trouvant à cette adresse et que la position de la borne d'accès est calculée comme le barycentre de cette empreinte.

15. Méthode de positionnement selon la revendication 13, **caractérisée en ce que** les informations topographiques relatives à ladite adresse donnent l'empreinte bidimensionnelle du bâtiment se trouvant à ladite adresse et que, si le bâtiment possède plusieurs adresses *A*₁*,A*₂*,...,A_{K}* de positions géographiques respectives *P*₁*,P*₂*,...,P_{K},* on détermine le diagramme de Voronoï des points situés en ces positions, la position géographique de la borne d'accès étant calculée comme un barycentre de l'intersection de ladite empreinte bidimensionnelle avec la cellule de Voronoï du point associé à ladite adresse.

16. Méthode de positionnement selon la revendication 1, **caractérisée en ce que** la première base de données est constituée à partir d'un ensemble initial de bornes d'accès, et qu'une borne d'accès n'appartenant pas au dit ensemble est identifiée et localisée à l'aide des signaux reçus par au moins trois bornes d'accès y appartenant, l'identifiant et la position de cette borne d'accès étant ensuite stockés dans la première base de données.

17. Méthode de positionnement selon la revendication 1, **caractérisée en ce que** lorsque la première estimation fournit une zone de positionnement d'un terminal non connexe ou bien ayant une surface supérieure à un certain seuil, une erreur d'estimation est diagnostiquée.

18. Méthode de positionnement selon la revendication 17, **caractérisée en ce que** lorsqu'une erreur d'estimation est diagnostiquée, l'on recherche parmi les bornes d'accès prises en compte dans la première étape d'estimation, celle ayant conduit à ladite erreur et on la supprime de la première base de données.

19. Méthode de positionnement selon la revendication 1, **caractérisée en ce que** l'on stocke de manière centralisée (360-362) les traces d'une pluralité de terminaux, une trace d'un terminal étant définie comme l'ensemble des identifiants de bornes détectées dans la première étape pendant une durée déterminée.

20. Méthode de positionnement selon les revendications 11 et 18, **caractérisée en ce que** la seconde base de données définissant un espace de positions autorisées ainsi qu'un espace de positions interdites pour ladite pluralité de terminaux, les positions géographiques des bornes d'accès sont optimisées à l'intérieur de leurs zones d'incertitudes respectives, l'optimisation étant réalisée en minimisant en moyenne une fonction de coût sur l'ensemble des traces, ladite fonction de coût dépendant de l'écart d'une trace à l'espace des positions autorisées.

## Patentansprüche

1. Verfahren zur Positionierung eines Terminals mit Hilfe von Signalen, die von einer Mehrzahl von Zugangsanschlüssen empfangen werden, umfassend:
- einen Schritt (110) der Extraktion von Identifikatoren der Zugangsanschlüsse ausgehend von den derart empfangenen Signalen;
- einen Schritt (120) der Recherche, in einer ersten Datenbank (BDP), von geografischen Positionsinformationen der Zugangsanschlüsse ausgehend von ihren jeweiligen Identifikatoren;
- einen ersten Schritt (130) der Abschätzung einer Positionsinformation des Terminals ausgehend wenigstens von den geografischen Positionsinformationen der Zugangsanschlüsse, wobei die Positionsinformation die Position dieses Terminals ist oder aber eine Zone, in der es sich befindet, genannt Positionierungszone;
**dadurch gekennzeichnet, dass** es ferner umfasst:
- einen Schritt (140) der Extraktion, ausgehend von einer zweiten Datenbank (SIG), von topografischen Informationen bezüglich einer Zone um die derart abgeschätzte Position herum, oder bezüglich der derart abgeschätzten Positionierungszone, wobei die zweite Datenbank eine topografische Modellierung dieser Zone in Form einer Liste von Objekten umfasst, die in Kategorien klassiert sind, wobei jedes Objekt definiert ist durch Attributdaten, die die Kategorie umfassen, zu der es gehört, geometrische Daten sowie geografische Daten;
- einen zweiten Schritt (150) der Abschätzung der Position des Terminals unter Verwendung der derart extrahierten topografischen Informationen.

2. Positionierungsverfahren nach Anspruch 1, **dadurch gekennzeichnet, dass** der zweite Abschätzschritt eine Gewichtung, mit Hilfe von Koeffizienten, die ausgehend von den derart extrahierten topografischen Informationen erhalten werden, entweder der Position des Terminals und einer zweiten Position, die mit Hilfe eines Satellitenpositionierungsverfahrens erhalten wird, oder von Messungen von Signalen, die von den Zugangsanschlüssen einerseits empfangen werden, und von Messungen von Signalen eines Satellitenpositionierungssystems andererseits umfasst.

3. Positionierungsverfahren nach Anspruch 1, **dadurch gekennzeichnet, dass** der zweite Abschätzschritt umfasst:
- einen Schritt der Auswahl, ausgehend von den derart extrahierten topografischen Informationen, aus einem ersten Positionierungsverfahren mit Hilfe von Signalen, die von den Zugangsanschlüssen empfangen werden, einem zweiten Positionierungsverfahren mit Hilfe von Signalen, die von einem Satellitenpositionierungssystem empfangen werden, oder einem dritten Hybrid-Positionierungsverfahren, das gleichzeitig das erste und das zweite verwendet;
- einen Schritt der Bestimmung der Position des Terminals mit Hilfe des derart ausgewählten Verfahrens.

4. Positionierungsverfahren nach Anspruch 3, **dadurch gekennzeichnet, dass** der Schritt der Auswahl des Positionierungsverfahrens ferner eine Zeitinformation des Terminals und Parameter zur Beschreibung der Orbits der Satelliten des Positionierungssystems verwendet.

5. Positionierungsverfahren nach Anspruch 3, **dadurch gekennzeichnet, dass** die zweite Datenbank eine Auswahlinformation des Positionierungsverfahrens für eine Mehrzahl von Punkten einer geografischen Zone umfasst.

6. Positionierungsverfahren nach Anspruch 4, **dadurch gekennzeichnet, dass** die zweite Datenbank für jeden Punkt der Mehrzahl die Auswahlinformation zugeordnet zu einer Zeitinformation umfasst.

7. Positionierungsverfahren nach einem der Ansprüche 3 bis 6, **dadurch gekennzeichnet, dass** dann, wenn das erste Positionierungsverfahren ausgewählt wird, die Hardware- und/oder Softwaremittel für die Durchführung des zweiten Positionierungsverfahrens in einen Bereitschaftszustand versetzt werden, und dass dann, wenn das zweite Positionierungsverfahren ausgewählt wird, die Hardware- und/oder Softwaremittel für die Durchführung des ersten Positionierungsverfahrens in einen Bereitschaftszustand versetzt werden.

8. Positionierungsverfahren nach Anspruch 3, **dadurch gekennzeichnet, dass** das erste Positionierungsverfahren für die Bestimmung der Position des Terminals entlang einer ersten Achse ausgewählt wird, und dass das zweite Positionierungsverfahren für die Bestimmung der Position des Terminals entlang einer zweiten Achse ausgewählt wird, die von der ersten verschieden ist.

9. Positionierungsverfahren nach Anspruch 1, **dadurch gekennzeichnet, dass** das Terminal ausgehend von den topografischen Informationen der zweiten Datenbank Eigenschaften der Ausbreitungskanäle zwischen erfassten Zugangsanschlüssen und einer Mehrzahl von Punkten der Zone bestimmt, und dass es hieraus für jeden dieser Anschlüsse eine theoretische Stärke an jedem dieser Punkte ableitet.

10. Positionierungsverfahren nach Anspruch 9, **dadurch gekennzeichnet, dass** der zweite Abschätzschritt die Position des Terminals bestimmt, indem aus den Punkten derjenige gesucht wird, der eine Kostenfunktion minimiert, welche abhängt vom Abstand zwischen den theoretischen Stärken an einem Punkt und den Stärken der Signale, die von den Zugangsanschlüssen empfangen werden.

11. Positionierungsverfahren nach Anspruch 1, **dadurch gekennzeichnet, dass** die erste Datenbank (BDP) für jeden Zugangsanschluss eine geografische Positionsinformation enthält, die seine geografische Position und Daten einschließt, die eine Unsicherheitszone um diese Position herum beschreiben.

12. Positionierungsverfahren nach Anspruch 11, **dadurch gekennzeichnet, dass** die Position des Terminals bestimmt wird ausgehend von einer Gewichtung der jeweiligen geografischen Positionen derZugangsanschlüsse, die durch dasTerminal erfasst werden, mit Hilfe von Gewichtungskoeffizienten, wobei die Koeffizienten erhalten werden durch eine zunehmende Funktion der Emissionsstärken der derart erfassten Anschlüsse und eine abnehmende Funktion der Oberflächen ihrer jeweiligen Unsicherheitszonen.

13. Positionierungsverfahren nach Anspruch 1, **dadurch gekennzeichnet, dass** die erste Datenbank zuvor ausgehend von einer Datei erstellt wird, die für jeden Zugangsanschluss seine Stationierungs-Postadresse angibt, und dass man jedem Zugangsanschluss eine geografische Position ausgehend von topografischen Informationen bezüglich dieser Adresse zuordnet, die in der zweiten Datenbank gespeichert sind.

14. Positionierungsverfahren nach Anspruch 13, **dadurch gekennzeichnet, dass** die topografischen Informationen bezüglich der Adresse den zweidimensionalen Abdruck des Gebäudes angeben, das sich an dieser Adresse befindet, und dass die Position des Zugangsanschlusses als der Schwerpunkt dieses Abdrucks berechnet wird.

15. Positionierungsverfahren nach Anspruch 13, **dadurch gekennzeichnet, dass** die topografischen Informationen bezüglich dieser Adresse den zweidimensionalen Abdruck des Gebäudes angeben, das sich an dieser Adresse befindet, und dass dann, wenn das Gebäude mehrere Adressen *A₁, A₂,...,A_{K}* mit jeweiligen geografischen Positionen *P₁, P₂,...,P_{K}* besitzt, man das Voronoi-Diagramm der Punkte bestimmt, die an diesen Positionen liegen, wobei die geografische Position des Zugangsanschlusses als ein Schwerpunkt des Schnitts des zweidimensionalen Abdrucks mit der Voronoi-Zelle des Punkts berechnet wird, der dieser Adresse zugeordnet ist.

16. Positionierungsverfahren nach Anspruch 1, **dadurch gekennzeichnet, dass** die erste Datenbank ausgehend von einer anfänglichen Gesamtheit von Zugangsanschlüssen erstellt wird, und dass ein Zugangsanschluss, der nicht zu der Gesamtheit gehört, mit Hilfe von Signalen identifiziert und lokalisiert wird, die von wenigstens drei dort zugehörigen Zugangsanschlüssen empfangen werden, wobei der Identifikator und die Position dieses Zugangsanschlusses anschließend in der ersten Datenbank gespeichert werden.

17. Positionierungsverfahren nach Anspruch 1, **dadurch gekennzeichnet, dass** dann, wenn die erste Abschätzung eine Positionierungszone eines Terminals liefert, die nicht zusammenhängt oder aber eine Oberfläche hat, die größer als eine bestimmte Schwelle ist, ein Abschätzfehler diagnostiziert wird.

18. Positionierungsverfahren nach Anspruch 17, **dadurch gekennzeichnet, dass** dann, wenn ein Abschätzfehler diagnostiziert wird, man aus den Zugangsanschlüssen, die in dem ersten Abschätzschritt berücksichtigt werden, denjenigen sucht, der zu dem Fehler geführt hat, und man ihn aus der ersten Datenbank entfernt.

19. Positionierungsverfahren nach Anspruch 1, **dadurch gekennzeichnet, dass** man in zentralisierter Weise die Spuren einer Mehrzahl von Terminals speichert (360-362), wobei eine Spur eines Terminals definiert ist als die Gesamtheit der Identifikatoren von Anschlüssen, die in dem ersten Schritt während einer vorbestimmten Dauer erfasst werden.

20. Positionierungsverfahren nach den Ansprüchen 11 und 18, **dadurch gekennzeichnet, dass** die zweite Datenbank einen Raum von zugelassenen Positionen sowie einen Raum von verbotenen Positionen für die Mehrzahl von Terminals definiert, wobei die geografischen Positionen der Zugangsanschlüsse innerhalb ihrer jeweiligen Unsicherheitszonen optimiert werden, wobei die Optimierung durchgeführt wird, indem man im Durchschnitt eine Kostenfunktion auf der Gesamtheit der Spuren minimiert, wobei die Kostenfunktion vom Abstand einer Spur zum Raum der erlaubten Positionen abhängt.

## Claims

1. A method for positioning a terminal using signals received from a plurality of access points of at least one wireless telecommunications network, comprising:
- a step for retrieving (110) identifiers of said access points from the signals thus received;
- a step (120) for searching in a first database (BDP) for geographical position information for said access points from their respective identifiers;
- a first step (130) for estimating a position information of the terminal from at least the geographical position information of said access points, said position information being the position of said terminal or a zone in which it is located, referred to as positioning zone;
**characterized in that** it also comprises:
- a step for retrieving (140), from a second database (SIG), topographical information relative to a zone around the position thus estimated or the positioning zone thus estimated, said second database comprising a topographical model of said zone, in the form of a list of objects classified into categories, each object being defined by attributive data comprising the category it belongs to, its geometrical and geographical data;
- a second step for estimating (150) the position of the terminal using the topographical information thus retrieved.

2. The positioning method according to claim 1, **characterized in that** the second estimating step comprises a weighting, using coefficients obtained from the topographical information thus retrieved, either of said position of the terminal and a second position obtained using a satellite positioning method, or measurements of signals received from the access points on the one hand and signal measurements of a satellite positioning system on the other hand.

3. The positioning method according to claim 1, **characterized in that** the second estimating step comprises:
- a step for selecting, from the topographical information thus retrieved, among a first positioning method using signals received from said access points, a second positioning method using signals received from a satellite positioning system, or a third hybrid positioning method using both the first and second;
- a step for determining the position of the terminal using the method thus selected.

4. The positioning method according to claim 3, **characterized in that** the step for selecting the positioning method can also use time information for the terminal and description parameters of the orbits of the satellites of said positioning system.

5. The positioning method according to claim 3, **characterized in that** the second database comprises information for selecting the positioning method for a plurality of points of a geographical zone.

6. The positioning method according to claim 4, **characterized in that** the second database comprises, for each point of said plurality, said selection information associated with time information.

7. The positioning method according to one of claims 3 to 6, **characterized in that** if the first positioning method is selected, the material and/or software means specific to the implementation of the second positioning method are put on standby and, if the second positioning method is selected, the material and/or software means specific to the implementation of the first positioning method are put on standby.

8. The positioning method according to claim 3, **characterized in that** the first positioning method is selected to determine the position of the terminal along a first axis and the second positioning method is selected to determine the position of the terminal along a second axis separate from the first.

9. The positioning method according to claim 1, **characterized in that** the terminal determines, from the topographical data of the second database, characteristics of the propagation channels between the detected access points and a plurality of points of said zone, and deduces therefrom, for each of said points, a theoretical power at each of those points.

10. The positioning method according to claim 9, **characterized in that** the second estimating step determines the position of the terminal by searching, among said points, for the one that minimizes a cost function depending on the gap between the theoretical power at one point and the powers of the signals received from the access points.

11. The positioning method according to claim 1, **characterized in that** the first database (BDP) contains, for each access point, geographical position information including its geographical position and data describing a zone of uncertainty around said position.

12. The positioning method according to claim 1, **characterized in that** the position of the terminal is determined from weighting of the respective geographical positions of the access points detected by said terminal using weighting coefficients, said coefficients being obtained by an increasing function of the transmission powers of the points thus detected and a decreasing function of the surfaces of their respective uncertainty zones.

13. The positioning method according to claim 1, **characterized in that** the first database is formed beforehand from a file providing, for each access point, its deployment mailing address, and each access point is assigned a geographical position from topographical information relative to said address stored in the second database.

14. The positioning method according to claim 13, **characterized in that** the topographical information relative to said address provides the two-dimensional footprint of the building located at that address and the position of the access point is then calculated as the barycenter of said footprint.

15. The positioning method according to claim 13, **characterized in that** the topographical information relative to said address provides the two-dimensional footprint of the building located at said address and, if the building has several addresses *A*₁*,A*₂*,...,A_{K},* of respective geographical positions *P*₁*,P*₂*,...,P_{K},* the Voronoï diagram of the points located in those positions is determined, the geographical position of the access point being calculated as a barycenter of the intersection of said two-dimensional footprint with the Voronoï cell of the point associated with said address.

16. The positioning method according to claim 1, **characterized in that** the first database can be formed from an initial set of access points, and an access point not belonging to said set can be identified and localized using signals received by at least three access points belonging to it, the identifier and the position of said access point then being stored in the first database.

17. The positioning method according to claim 1, **characterized in that** when the first estimate provides a positioning zone of a terminal that is unconnected or has a surface above a certain threshold, an estimation error is diagnosed.

18. The positioning method according to claim 17, **characterized in that** when an estimation error is diagnosed, one searches among the access points taken into account in the first estimation step for the one having led to said error and it is eliminated from the first database.

19. The positioning method according to claim 1, **characterized in that** one stores, in a centralized manner (360-362), the traces of a plurality of terminals, a trace of a terminal being defined as the set of identifiers for points detected in the first step during a particular period.

20. The positioning method according to claims 11 and 18, **characterized in that** the second database advantageously defines a space for authorized positions as well as a space for positions prohibited for said plurality of terminals, the geographical positions of the access points are optimized inside their respective zones of uncertainty, the optimization being done by minimizing on average a cost function over all of the traces, said cost function depending on the deviation of a trace at the authorized positions space.
